# EUROPEAN PATENT APPLICATION

(11) **EP 3 469 960 A1**
(43) Date of publication of application: **17.04.2019**
(21) Application number: 18000804.7
(22) Date of filing: 10.10.2018
(51) Int. Cl.: A47G 9/10

(54) **AIR PILLOW**

(30) Priority: 10.10.2017 JP 2017004617 U
(71) Applicant: Green Garden Toys Hong Kong Co., Ltd, Mongkok, Kln, Hong Kong (HK)
(72) Inventor: Ding, Huiyi, Hongkong (HK); Chen, Qin, Hongkong (HK)
(74) Representative: Mayr, Claus-Michael

(57) **Abstract**

It is an object of the present invention to provide an air pillow which is hygienic and more compact without having to use the mouth for introducing air inside. A push-type air pillow body (11) is provided and a hand-operated pump unit (12) which is built in the air pillow main body (11) and which is capable of supplying air into the air pillow main body (11) and which is able to exhaust air. The pump unit (12) includes a pump unit 13 capable of supplying air into the air pillow main body (11), when a high pressure is formed inside by the pump unit (13), and a valve unit (14) configured to supply air to the outside and to suck air from the outside when a negative pressure is formed inside by the pump unit (13).

## Description

The present invention relates to a pneumatic pillow suitable for supporting the head when traveling or the like.

Conventionally, many air pillows suitable for supporting the head during travel etc. have been proposed and put to practical use.

Although various contrivances have been made in these conventional air pillows, in recent years, in particular, as emphasizing hygiene, as disclosed in, for example, Patent Document 1, air is blown into the air pillow without using the mouth.

However, since the air pillow as disclosed in Patent Document 1 is connected to a push pump for placing air into the air pillow main body via a tube to the air pillow main body, it is particularly difficult to push it. The push pump drooped and was in the way.

For these reasons, there were many people requesting a more compact air pillow.

JP-3163934 U

### SUMMARY OF THE INVENTION

The present invention is intended to respond to the above-mentioned conventional demands, and it is an object of the present invention to provide an air pillow which is hygienic and compact.

In order to solve the above-mentioned problems, according to a first aspect of the present invention, there is provided a pillow-like air pillow body comprising: a pouch-like air pillow main body; a pillow body which is capable of supplying air into the air pillow main body, and a hand-pusher pump unit, wherein the hand-pusher pump unit comprises: a pump part capable of supplying air into the air pillow body; a pump part, wherein a high pressure is formed internally by the pump part, and a valve part configured to supply air to the inside of the air pillow main body and to suck air from the outside when a negative pressure is formed inside the pillow body by the pump part.

Therefore, since the hand-operated pump unit is built in the air pillow body, there is nothing that hangs down from the air pillow body.

According to a second aspect of the present invention, the pump portion is formed as a projecting portion on the air pillow main body, made of a flexible material and formed as a deformable expanded portion when pressed, wherein the valve portion opens in a surface portion of the air pillow body and includes an air circulation hole portion for sucking in and discharging air, a valve main body capable of opening and closing the air circulation hole portion, and an air circulation portion for allowing air to flow between the pump portion and the valve portion.

Therefore, since the pump part is disposed protruding above the air pillow body, it is easy to push when placing air in the air pillow main body.

According to a third aspect of the present invention, the valve body includes a first valve seat, and a second valve seat provided on the inner side of the first valve seat, wherein the first valve seat comprises a first valve portion having flexibility for closing the first valve seat so as to be capable of opening and closing, and a second valve portion having flexibility for closing the second valve seat so as to be opened and closed, wherein the air circulation portion is provided between the first valve portion and the second valve portion.

Therefore, when pushing the pump part by hand to introduce air into the air pillow body, when the pump part is contracting, the first valve part is in the closed state and the second valve part is in the open state, and when the pump portion is restored, the first valve portion is in the open state and the second valve portion is in the closed state.

According to a fourth aspect of.the present invention, the pump portion has a hollow dome body made of a synthetic resin, and a spring is installed in the dome body, as well as the first valve seat and the second valve seat. The second valve seat, the first valve portion, and the second valve portion are disposed coaxially and are biased to a closed state at all times by a spring arranged coaxially.

Therefore, the pump portion is quickly restored by the spring installed in the hollow dome body made of synthetic resin forming the pump portion, and the first valve seat, and the second valve seat, wherein the first valve seat, the valve portion of the first valve seat and the second valve portion are coaxially arranged and constantly biased to the closed state by the spring disposed coaxially. The valve seat is also normally closed, but by forming a high pressure or negative pressure in the valve portion, the first valve seat or the second valve seat is opened or closed.

According to a fifth aspect of the present invention, the air pillow main body is formed into a substantially U-shaped flat surface so as to be fitted in the neck of a person.

Therefore, it is only necessary to fit in the neck at the time of use, so that the position does not shift.

According to a sixth aspect of the present invention, in the air pillow main body, a protruding portion capable of supporting the back head portion is formed at a position where the rear head portion of the person is hit.

Accordingly, the neck is stabilized since the protruding portion supports the occipital region at the time of use.

In the air pillow according to the first aspect of the present invention, a push-type air pillow main body and a hand-operated pump unit incorporated in the air pillow main body capable of supplying air into the air pillow main body and capable of exhausting air are provided, wherein the hand-pusher pump unit includes: a pump unit capable of supplying air into the air pillow body, wherein high pressure is formed inside the pillow body by the pump unit, and a valve portion is provided which is configured to supply air into the main body and to suck air from outside when a negative pressure is formed inside by the pump portion.

Therefore, since the hand-operated pump unit is built in the air pillow body, there is nothing that hangs down from the air pillow body. There is no need to use the mouth to insert air inside. In addition, it is more compact.

In the air pillow according to claim 2, the pump portion is formed to protrude above the air pillow body and made of a flexible material, formed as a deformable expanded portion when pressed, wherein the valve portion opens in a surface portion of the air pillow body and includes an air circulation hole portion for sucking in and discharging air, a valve body capable of opening and closing the air circulation hole portion, and an air circulating portion for allowing air to flow between the pump portion and the valve portion. Therefore, since the pump part is disposed protruding above the air pillow body, it is easy to push when placing air in the air pillow main body.

In the air pillow according to claim 3, the valve main body includes a first valve seat, a second valve seat provided on the inner side of the first valve seat, wherein the first valve portion has flexibility for closing the seat so as to be opened and closed, and the second valve portion has flexibility for closing the second valve seat so as to be opened and closed, wherein the air flow portion is provided between the first valve portion and the second valve portion. Therefore, when pushing the pump part by hand to introduce air into the air pillow body, when the pump part is contracting, the first valve part is in the closed state and the second valve part is in the open state, and when the pump portion is restored, the first valve portion is in the open state and the second valve portion is in the closed state. As a result, when pushing the pump part by hand to introduce air into the air pillow body, when the pump part is contracting due to the high pressure formed inside, the first valve part is closed, the second valve portion is in an open state, and when the pump portion is restored due to the negative pressure formed inside, the first valve portion is opened and the second valve portion is in the closed state, and air can be introduced into the air pillow body efficiently and quickly.

In the air pillow according to the fourth aspect of the invention, the pump portion has a hollow dome body made of a synthetic resin, and a spring is installed in the dome body as well as the first valve seat and the second valve seat. The second valve seat, the first valve portion, and the second valve portion are coaxially arranged and constantly biased to a closed state by a spring disposed coaxially. Therefore, the pump portion is quickly restored by the spring installed in the hollow dome body made of synthetic resin forming the pump portion, and the first valve seat, and the second valve seat. The first valve portion and the second valve portion are disposed coaxially and are constantly biased to the closed state by the spring disposed coaxially so that the first valve portion also moves to the second one. The valve portion is also always in a closed state, but the high pressure or the negative pressure is formed in the valve portion, whereby the first valve portion or the second valve portion is opened or closed. As a result, the pump part is quickly restored by the spring installed in the hollow dome body made of synthetic resin forming the pump part, the first valve seat, and the second valve seat. Since the first valve portion and the second valve portion are disposed coaxially and constantly biased to the closed state by the spring disposed coaxially, the first valve portion also moves to the second valve portion. The first valve portion is also normally closed but the first valve portion or the second valve portion is opened or closed by forming high pressure or negative pressure in the valve portion. Air can be more efficiently and quickly introduced into the air pillow body.

In the air pillow according to claim 5, the air pillow main body is formed in a substantially U-shaped planar shape so as to be fitted in the neck of the person. Therefore, it is only necessary to fit in the neck at the time of use, so that the position does not shift. As a result, since it is only necessary to fit in the neck at the time of use, since the position is not shifted, even when sitting on a seat with a backrest of the vehicle, it is not necessary to reposition the air pillow.

In the air pillow according to the sixth aspect of the present invention, a projecting portion capable of supporting the back head portion is formed at a position where the rear head portion of the person of the air pillow body hits. Accordingly, the neck is stabilized since the protruding portion supports the occipital region at the time of use. As a result, since the protrusion supports the occipital region during use, the neck is stabilized, so that the neck can be stabilized with a small force at the time of use.
FIG. 1 is a perspective view showing a schematic configuration of a pneumatic pillow according to an embodiment of the present invention.
FIG. 2 is a perspective view showing a schematic configuration of a hand-operated pump unit constituting the air pillow of the embodiment of the present invention.
FIG. 3 is an exploded perspective view showing an exploded state of the hand-operated pump unit shown in FIG. 2.
FIGS. 4 to 7 are schematic views for explaining the mechanism of the hand-operated pump unit according to the embodiment.

### DETAILED DESCRIPTION OF THE PREFERRED EMBODIMENTS

Hereinafter, a pneumatic pillow according to the present invention will be described with reference to the accompanying drawings.

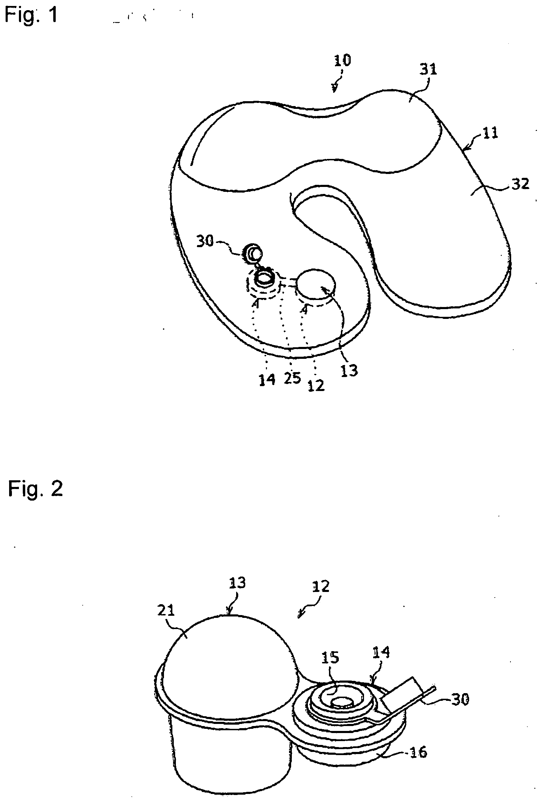

First, the configuration of the air pillow 10 according to the embodiment will be described. FIGS. 1 to 7 show a schematic configuration of a pneumatic pillow 10 according to an embodiment of the present invention.

As shown in FIG. 1, the air pillow 10 of this embodiment includes a pouch-like air pillow that is capable of supplying air into the air pillow body 11 and of exhausting it, and a hand-operated pump unit 12.

As shown in FIG. 2, the hand-pusher pump unit 12 includes a pump unit 13 capable of supplying air into the air pillow body 11, the pump unit 13 forming a high pressure inside, and a valve section 14 is configured to supply air into the air pillow main body 11 when the air pressure is applied and to suck air from the outside when a negative pressure is formed inside by the pump section 13.

Here, as shown in FIGS. 1 and 2, the pump portion 13 is disposed so as to protrude above the air pillow main body 11 and made of a flexible material, and as a bulging portion which can be deformed when pressed. The valve portion 14 opens at the surface portion of the air pillow main body 11 and has an air circulation hole portion 15 for sucking in and discharging air, a valve main body 16 capable of opening and closing the air circulation hole portion 15, a pump portion 13, and an air circulation portion 25 for allowing air to flow between the pump portion 13 and the valve portion 14.

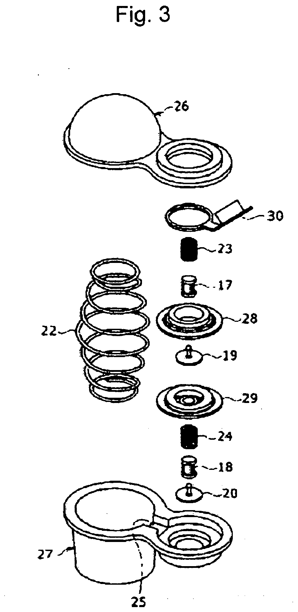

As shown in FIG. 3, the valve body 14 includes a first valve seat 17, a second valve seat 18 provided on the inner side of the first valve seat 17, a first valve portion 19 having flexibility for closing the first valve seat 18 so as to be capable of opening and closing, and a second valve portion 20 having flexibility for closing the second valve seat 18 so as to be opened and closed. The flowing portion 25 is provided between the first valve portion 19 and the second valve portion 20.

Further, as shown in FIGS. 2 and 3, the pump portion 13 has a hollow dome body 21 made of a synthetic resin and a spring 22 installed in the dome body 21, and has a first valve seat 17, and a second valve seat 18. The first valve portion 19 and the second valve portion 20 are arranged coaxially, and are always brought to the closed state by the compressed springs 23, 24 arranged coaxially.

As shown in FIG. 3, the pump unit 13, the valve unit 14 and the air circulation unit 25 connecting the pump unit 13, the valve unit 14 and the pump unit upper member 26 and the pump unit lower member 27 are disposed between the pump unit 13 and the part of the valve portion 14. The first valve seat 17, the second valve seat 18, the first valve portion 19, the second valve portion 20, the spring 23, 24, a first valve seat lower edge member 28 forming a lower edge portion of the first valve seat 17, a second valve seat lower edge member 29 forming a lower edge portion of the second valve seat 18, and a lid portion 30 capable of covering the air circulation hole portion 15 are sandwiched and joined together.

Here, as shown in FIG. 1, the air pillow main body 11 is formed into a substantially U-shaped flat surface so as to be fitted in the neck of a person.

Further, the hand-operated pump unit 12 is built in the one end portion side of the air pillow body 11 having the substantially U-shaped planar shape.

Further, at the position where the rear head of the person of the air pillow main body 11 is hit, a protruding portion 31 in the shape of a two-sided mountain which can support the back head portion is formed.

The surface of the air pillow main body 11 is covered with a cover material 32 made of a material with good touch.

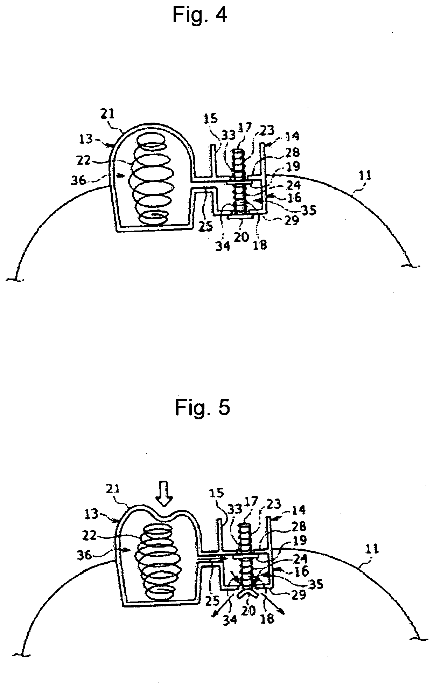

Next, the mechanism of the hand-operated pump unit 12 will be described with reference to FIGS. 4 to 7.

As shown in FIG. 4, the hand-pusher pump unit 12 includes a first outer valve portion 19 forming the valve body 16 in the valve portion 14 and a second inner valve portion 20. Springs 23 and 24 are wound around the first valve seat 17 and the second valve seat 18 so as to be located between the first valve seat 17 and the first valve seat lower edge member 28 and between the second valve seat 18 and the first valve seat 17. The first and the second valve seat 17, 18 respectively formed between the valve seat 18 and the second valve seat lower edge member 29 are inserted, and the insertion of the inner ends of the springs 23 and 24 is biased by the omission of the support portion and the gap 33 between the first valve seat 17 and the first valve seat lower edge member 28 and between the second valve seat 18 and the second valve seat lower edge member 29. Both of them are in a closed state, and the inter-valve space portion 35 on the lower side of the air circulation hole portion 15 is a substantially enclosed space.

As shown in Fig. 5, when pushing the dome body 21 of the pump portion 13 against the urging force of the spring 22 by hand, the hand-operated pump unit 12 pushes the air in the hollow space portion 36 in the dome body 21, which then passes through the inside of the air circulation portion 25 and flows into the inter-valve space portion 35, and the inside of the inter-valve space portion 35 comes under high pressure.

As a result, a pressing force is exerted on the first valve portion 19 and the second valve portion 20, so that the first valve portion 19 is pressed against the first valve seat lower edge member 28. The second valve portion 20 bends and separates from the second valve seat lower edge member 29 to be in an open state, and the air in the inter-valve space portion 35 passes through the gap 34 and into the air pillow body 11, respectively.

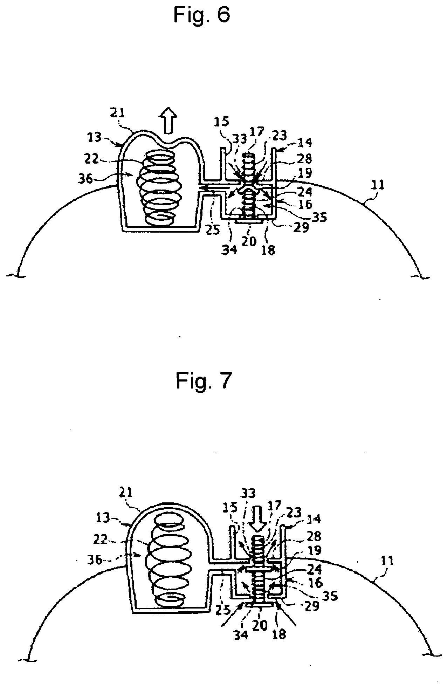

As shown in Fig. 6, when the force of the hand on the dome body 21 of the pump section 13 is released, the dome body 21 moves in the direction of the spring 22 provided in the hollow space section 36. The space inside the inter-valve space portion 35 passes through the inside of the air circulation portion 25 and the air flows into the hollow space portion 36 and the pressure inside the inter-valve space portion 35 becomes negative.

As a result, a tensile force is exerted on the first valve portion 19 and the second valve portion 20, so that the first valve portion 19 bends and separates from the first valve seat lower edge member 28 to be in an open state. The second valve portion 20 is pressed against the second valve seat lower edge member 29 so that it remains in the closed state, and air flows from the outside into the inter-valve space portion 35 through the clearance 33, 25 and is supplied into the hollow space portion 36 of the dome body 21 and returns to the normal state shown in FIG. 4.

External air is supplied into the air pillow main body 11 by repeating the states shown in FIGS. 4 to 6.

As shown in Fig. 7, when the outer end portion of the first valve seat 17 is pushed with a finger, the first valve portion 19 pushes the second valve. Since the outer end of the seat 18 is pushed, the first valve portion 19 is separated from the first valve seat lower edge member 28, and the second valve portion 20 is also separated from the second valve seat lower edge member 29 to be in an open state.

As a result, the air in the air pillow main body 11 passes through the gaps 33, 34 and can escape to the outside, so that the air can be stored in a bag or the like in a more compact state.

When the finger is released from the outer end portion of the first valve seat 17, the hand-operated pump unit 12 returns to the normal state shown in FIG. 4 by the urging force of the springs 23, 24.

Next, the function and effect of the air pillow 10 of this embodiment will be described.

As shown in FIGS. 1 to 7, the air pillow 10 according to the embodiment of the present invention includes a pouch-like air pillow capable of supplying air into the air pillow main body 11, and a hand pressing pump unit 12 built in the main body 11. The hand pressed pump unit 12 includes a pump unit 13 capable of supplying air into the air pillow body 11, a valve configured to supply air into the air pillow main body 11 when a high pressure is formed therein and to suck air from the outside when a negative pressure is formed inside by the pump part 13 section 14.

Therefore, since the hand-pushed pump unit 12 is built in the air pillow main body 11, there is nothing hanging down from the air pillow main body 11.

So, there is no need to use the mouth for placing air inside. In addition, the air pillow is more compact.

Here, the pump portion 13 is formed to protrude above the air pillow main body 11, made of a flexible material, formed as a deformable expanded portion when pressed, and the valve portion 14 is formed as a pneumatic cushion. An air circulation hole portion 15 that opens to the surface portion of the main body 11 and that sucks in and discharges air, a valve main body 16 that can open and close the air circulation hole portion 15, and a pump portion, and an air circulation part 25 for allowing air to flow between the valve part 14 and the air flow part 13 are provided.

Therefore, since the pump portion 13 is disposed protruding above the air pillow main body 11, it is easy to push when placing air into the air pillow main body 11.

As a result, since it is easy to push the pump part 13 when placing the air in the air pillow main body 11, by operating the pump part 13 when necessary, it is possible to easily and quickly supply air into the air pillow main body 11.

Further, the valve main body 16 includes a first valve seat 17 and a second valve seat 18 provided on the inner side of the first valve seat 17, wherein the second valve seat 18 closes the first valve seat 17 so as to open and close, a first valve portion 19 having flexibility and a second valve portion 20 having flexibility for closing the second valve seat 18 so as to be opened and closed, and wherein the air flowing portion 25 is constituted by a first valve section 17 and a second valve section 18.

Therefore, when pushing the pump portion 13 by hand and introducing air into the air pillow main body 11, when the pump portion 13 is contracting, the first valve portion 19 is in the closed state and the second valve portion 20 is in the open state. When the pump portion 13 is restored, the first valve portion 19 is in the open state and the second valve portion 20 is in the closed state.

As a result, when the pump portion 13 is contracting when pushing the pump portion 13 by pushing the air into the air pillow main body 11, the first valve portion 19 is closed by the high pressure formed inside, the second valve portion 20 is in the open state, and when the pump portion 13 is restored due to the negative pressure formed inside, the first valve portion 19 is in the open state and the second valve portion 20 is in a closed state, air can be introduced into air pill body 11 efficiently and quickly.

Further, the pump section 13 is made of a synthetic resin and has a hollow dome body 21 and a spring 22 installed in the dome body 21, and also has a first valve seat 17, a second valve seat 18, the first valve portion 19 and the second valve portion 20 are arranged coaxially and are constantly urged to the closed state by the springs 23 and 24 which are disposed coaxially.

Accordingly, the pump portion 13 is quickly restored by the spring 22 incorporated in the hollow dome body 21 made of a synthetic resin forming the pump portion 13. The first valve seat 17, the second valve seat 18, the first valve seat 17, the first valve portion 19 and the second valve portion 20 are coaxially arranged and constantly energized by the springs 23 and 24. They are arranged coaxially. so that the first valve portion 19 and also the second valve portion 20 are also always in the closed state. High pressure or negative pressure is formed in the valve portion 13, whereby the first valve portion or the second valve portion 20 is opened or closed.

As a result, the pump portion 13 is quickly restored by the spring 22 incorporated in the hollow dome body 21 made of synthetic resin forming the pump portion 13. The first valve portion 19 and the second valve portion 20 are disposed coaxially and constantly biased to the closed state by the coaxially disposed springs 23, 24, the first valve portion 19 and the second valve portion 20 are always in the closed state, but by forming a high pressure or negative pressure in the valve portion 13, the first valve portion 19 or the second valve portion 20 is in the open state, so that air can be more quickly introduced into the air pillow main body 11 more efficiently.

Further, the air pillow main body 11 is formed into a substantially U-shaped flat surface so as to be fitted in the neck of a person.

Therefore, it is only necessary to fit in the neck at the time of use, so that the position does not shift.

As a result, since it is only necessary to fit in the neck at the time of use, since the position is not shifted, even when sitting on a seat with a backrest of the vehicle, it is not necessary to reposition the air pillow.

Further, a protruding portion 31 capable of supporting the back of the head is formed at a position where the back of the person of the air pillow main body 11 is hit.

Therefore, in use, the protrusion 31 supports the occipital region, so that the neck is stabilized.

As a result, since the protrusion 31 supports the occipital region during use, the neck is stabilized, so that it is easier to stabilize the neck with a small force at the time of use.

Although the embodiments of the air pillow according to the present invention have been described above in detail with reference to the drawings, the specific configuration is not limited to this embodiment, and any design change that does not depart from the gist of the present invention is included in the present invention.

Since the air pillow according to the present invention can be widely practiced as a pillow suitable for supporting the head when traveling or the like, it has industrial applicability.
10 Air pillow
11 Air pillow body
12 Manual push pump unit
13 Pump section
14 Valve section
15 Air circulation hole section
16 Valve main body
17 First valve seat
18 Second valve seat
19 First valve portion
20 Second valve portion
21 Dome body
22 Spring
23 Spring
24 Spring
25 Air ventilation part
26 Pump unit upper part
27 Pump unit lower part
28 First valve seat lower edge part
29 Second valve seat lower edge part
30 Lid part
31 Protruding part
32 Cover material
33 Clearance
34 Gap
35 Valve space portion
36 Hollow space portion

## Claims

1. Air pillow comprising a push-type air pillow body; and a hand-operated pump unit housed in the air pillow body capable of supplying air into the air pillow body and being capable of exhausting air, wherein the hand-operated pump section is capable of supplying air to the inside of the air pillow main body, a pump section is joined to the pump section and supplies air into the air pillow main body when a high pressure is formed inside by the pump section, and a valve portion is configured to suck air from the outside when a negative pressure is formed inside by the air pillow.

2. The air pillow according to claim 1, wherein the pump part is formed as a protruding part which is protruded on the air pillow main body and made of a flexible material and formed as a deformable expanded part when pressed, and the valve part is formed on the air pillow main body, a valve body that opens to the surface portion and that allows air to flow in and out and a valve body that is capable of opening and closing the air flow hole portion are provided, and a valve portion that opens and closes the air flow hole portion is provided, wherein the pump portion and the valve portion comprise an air flowing portion for allowing air to flow into the air bag.

3. The air pillow according to claim 1 or 2, wherein the valve body includes a first valve seat, a second valve seat provided on an inner side of the first valve seat, and a second valve seat that closes the first valve seat so as to be opened and closed, and a second valve portion having flexibility for closing the second valve seat so as to be opened and closed, wherein the air circulation portion is provided between the first valve portion and the second valve portion, and wherein the valve portion of the air bag is provided on the valve seat portion.

4. The air pillow according to at least one of the preceding claims, wherein the pump portion includes a hollow dome body made of a synthetic resin and a spring interposed in the dome body, wherein the first valve seat, the second valve seat, the first valve portion, and the second valve portion are disposed coaxially and are constantly biased to a closed state by a spring disposed coaxially.

5. The air pillow according to at least one of the preceding claims, wherein the air pillow main body is formed into a substantially U-shaped flat surface so as to be fitted in the neck of a person.

6. The air pillow according to claim 5, wherein a projecting portion capable of supporting the back head portion is formed at a position where the rear head portion of the person of the air pillow body hits.
